# EUROPÄISCHE PATENTANMELDUNG

(11) **EP 1 816 322 A1**
(43) Veröffentlichungstag der Anmeldung: **08.08.2007**
(21) Anmeldenummer: 07000840.4
(22) Anmeldetag: 17.01.2007
(51) Int. Cl.: F01M 11/04, F16D 57/00

(54) **Einrichtung zum Befüllen und Entleeren des Öls eines Retarders mit getrenntem Ölhaushalt**

(30) Priorität: 01.02.2006 DE 102006004520
(71) Anmelder: ZF FRIEDRICHSHAFEN Aktiengesellschaft, 88038 Friedrichshafen (DE)
(72) Erfinder: Buri, Gerhard, 88677 Markdorf (DE); Sauter, Frank, 88074 Meckenbeuren (DE); Reisch, Bernhard, 88316 Isny (DE)

(57) **Zusammenfassung**

Es wird eine Einrichtung zum Befüllen und Entleeren des Öls eines Retarders mit getrenntem Ölhaushalt vorgeschlagen, welche zum Befüllen und Entleeren jeweils eine kombinierte Verschlussschraube (Befüllschraube bzw. Ölablassschraube) (1) umfasst, die über zumindest zwei Dichtstellen zumindest zwei unterschiedliche Kanäle (2, 3), die jeweils einem Ölraum zugeordnet sind, verschließt.

## Beschreibung

Die vorliegende Erfindung bezieht sich auf eine Einrichtung zum Befüllen und Entleeren des Öls eines Retarders mit getrenntem Ölhaushalt gemäß dem Oberbegriff des Patentanspruchs 1.

Heutzutage ist vom Gesetzgeber bei der Entsorgung ein besserer Recyclinggrad bzw. eine Trennbarkeit der verschiedenen Stoffe vorgeschrieben. In diesem Zusammenhang stellen insbesondere die in der Automobiltechnik verwendeten Betriebsstoffe wie Öl und Kühlmittel bei komplex aufgebauten Systemen wie Motoren und Getrieben ein Problem dar. Wenn beispielsweise zwei oder mehrere voneinander getrennte Räume vorliegen (gefüllte Komponenten, abgetrennte Gehäusebereiche, Kanäle, usw.) und der Betriebsstoff über die herkömmliche Ablassschraube entleert wird, so bleibt in den angesprochenen Bereichen eine wesentliche Menge an Betriebsstoff im System.

Sehr stark tritt dieser Effekt bei Retardern auf. Hier bestehen verschiedene Bereiche, die durch den Retarder- oder Getriebesumpf, die hydraulische Steuerung mit Kanälen und Leitungen und den Wärmetauscher gebildet werden.

Da diese Bereiche volumetrisch in ähnlicher Größenordnung liegen, verbleibt bei einem einfachen Ölwechsel ein sehr großer Anteil des Öls im Getriebe. Außerdem muss eine aufwändige Prozedur zum Befüllen der Räume beim Erstbefüllen vorgenommen werden; beispielsweise ist in der Regel eine Probefahrt mit anschließendem Prüfen bzw. Auffüllen des Getriebes vorgeschrieben.

Alternativ kann das Getriebe bei der Erstbefüllung so gezielt überbefüllt werden; dass sich im späteren Betrieb der richtige Ölstand einstellt. Diese Vorgehensweise ist jedoch nicht immer zuverlässig. Das Vorsehen mehrerer Ölablass- und Befüllpositionen ist auch möglich, was aber im Servicefall zu mehr Aufwand führt, wobei die weiteren Ölablass- und Befüllpositionen vergessen werden könnten. Eine weitere Möglichkeit sind spezielle Entleerventile, die entweder gezielt betätigt werden müssen oder beim Entleeren selbsttätig öffnen. Diese Ventile sind allerdings meist sehr aufwändig und teuer.

Die DE 198 50 382 A1 der Anmelderin beschreibt beispielsweise eine Vorrichtung zum Ablass des in einem Bauteil eines Kraftfahrzeuges enthaltenen Öls. Diese bekannte Vorrichtung zum vollständigen Ablass des in einem Bauteil eines Kraftfahrzeuges, wie hydraulische Steuerung, Getriebe mit Wandler oder Automatikgetriebe, enthaltenen Öls weist ein innerhalb des Bauteils vorhandenes Ölablassventil auf für mindestens einen im Bauteil vorhandenen Ölraum, das automatisch bei Abnahme des Verschlussstopfens des Bauteils geöffnet wird. Wie bereits beschrieben, erweist sich diese Konstruktion als aufwändig und kostenintensiv.

Der vorliegenden Erfindung liegt die Aufgabe zugrunde, eine Einrichtung zum Befüllen und Entleeren des Öls eines Retarders mit getrenntem Ölhaushalt anzugeben, welche die erwähnten Nachteile der aus dem Stand der Technik bekannten Einrichtungen vermeidet. Insbesondere soll bei der Befüllung ein einmaliger Befüllvorgang erforderlich sein und die Notwendigkeit einer Probefahrt entfallen. Zudem soll bei einem einfachen und kostengünstigen Aufbau die Anzahl der Ölablass- und Befüllpositionen möglichst gering gehalten werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Einrichtung zum Befüllen und Entleeren des Öls eines Retarders mit getrenntem Ölhaushalt vorgeschlagen, welche zum Befüllen und Entleeren jeweils eine kombinierte Verschlussschraube (Befüllschraube bzw. Ölablassschraube) umfasst, die über zumindest zwei- Dichtstellen zumindest zwei unterschiedliche Kanäle, die jeweils einem Ölraum zugeordnet sind, verschließt.

In vorteilhafter Weise ist die Befüllschraube unter einem räumlichen Winkel angeordnet, der ein einfaches Befüllen ermöglicht, wobei in der die Schraube aufnehmenden Bohrung eine Überlaufkante vorgesehen ist, durch die in den zumindest zwei Kanälen der gleiche Ölstand automatisch einstellbar ist. Die Ölablassschraube ist gemäß der Erfindung vorzugsweise am tiefsten Punkt der zumindest zwei Ölräume angeordnet.

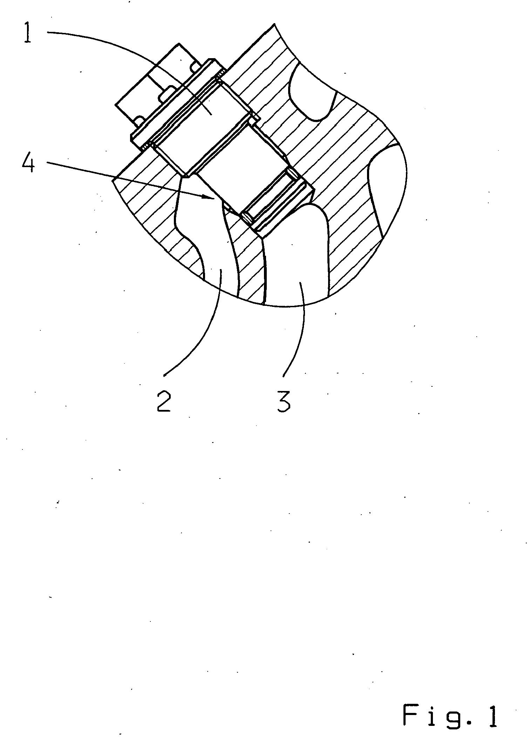

In der beigefügten Figur ist eine Befüllschraube 1 der erfindungsgemäßen Einrichtung im montierten Zustand dargestellt. Des weiteren sind zwei unterschiedliche Kanäle 2, 3 dargestellt, die jeweils einem Ölraum zugeordnet sind, welche durch die Befüllschraube 1 verschlossen werden können. Ferner ist eine Überlaufkante 4 vorgesehen, über die automatisch in beiden Kanälen 2, 3 der gleiche Ölstand eingestellt werden kann.

Durch die erfindungsgemäße Konzeption wird der Vorteil erzielt, dass lediglich eine Ölbefüll- und eine Ölablassstelle benötigt werden. Zudem ist bei der Befüllung ein einmaliger Befüllvorgang erforderlich und die Notwendigkeit einer Probefahrt entfällt.

Des weiteren wird kein zusätzlicher Ölraum für eine Überbefüllung benötigt, was für den Fall eines Retarders mit getrenntem Ölhaushalt sehr vorteilhaft ist. Ein weiterer Vorteil besteht darin, dass ein hoher Entleergrad entsprechend den Forderungen des Gesetzgebers erzielt werden kann, was auch in einem hohen Ölwechselanteil und somit in längeren Ölwechselintervallen resultiert.

Die erfindungsgemäße Einrichtung ist einfach aufgebaut und kostengünstig herstellbar, wobei im Servicefall der Ölwechsel vereinfacht wird.

### Bezugszeichen

- 1: Befüllschraube
- 2: Kanal
- 3: Kanal
- 4: Überlaufkante

## Patentansprüche

1. Einrichtung zum Befüllen und Entleeren des Öls eines Retarders mit getrenntem Ölhaushalt, **dadurch gekennzeichnet, dass** sie zum Befüllen und Entleeren jeweils eine kombinierte Verschlussschraube (Befüllschraube bzw. Ölablassschraube) (1) umfasst, die über zumindest zwei Dichtstellen zumindest zwei unterschiedliche Kanäle (2, 3), die jeweils einem Ölraum zugeordnet sind, verschließt.

2. Einrichtung zum Befüllen und Entleeren des Öls eines Retarders mit getrenntem Ölhaushalt nach Anspruch 1, **dadurch gekennzeichnet, dass** die Befüllschraube (1) unter einem räumlichen Winkel angeordnet ist, der ein einfaches Befüllen ermöglicht, wobei in der die Schraube (1) aufnehmenden Bohrung eine Überlaufkante (4) vorgesehen ist, durch die in den zumindest zwei Kanälen (2, 3) der gleiche Ölstand einstellbar ist.

3. Einrichtung zum Befüllen und Entleeren des Öls eines Retarders mit getrenntem Ölhaushalt nach Anspruch 1 oder 2, **dadurch gekennzeichnet, dass** die Ölablassschraube am tiefsten Punkt der zumindest zwei Ölräume angeordnet ist.
